# EUROPEAN PATENT SPECIFICATION

(11) **EP 2 580 431 B1**
(45) Date of publication and mention of the grant of the patent: **24.06.2015**
(21) Application number: 11791656.9
(22) Date of filing: 19.05.2011
(51) Int. Cl.: F01D 5/18, F01D 25/12

(54) **COMPONENT WALL HAVING DIFFUSION SECTIONS FOR COOLING IN A TURBINE ENGINE**
BAUTEILWAND MIT EINEM DIFFUSORABSCHNITT ZUM KÜHLEN EINER TURBOMASCHINE
PAROI DE COMPOSANT AYANT UNE SECTION DE DIFFUSION POUR LE REFROIDISSEMENT DANS UN MOTEUR DE TURBINE

(30) Priority: 11.06.2010 US 813624
(43) Date of publication of application: 17.04.2013
(73) Proprietor: Siemens Energy, Inc., Orlando, FL 32826-2399 (US)
(72) Inventor: LEE, Ching-Pang, Cincinnati OH 45243 (US); UM, Jae Y., Winter Garden FL 34787 (US); MUNSHI, Mrinal, Orlando FL 32828 (US); ZUNIGA, Humberto A., Casselberry FL 32707 (US)
(74) Representative: Maier, Daniel Oliver
(86) International application number: PCT/US2011/037084
(87) International publication number: WO 2012/021194

(56) References cited:
- EP-A1- 1 609 949
- EP-A2- 1 043 480
- EP-A2- 1 091 090
- GB-A- 2 438 861
- JP-A- 10 089 005

## Description

### FIELD OF THE INVENTION

The present invention relates to turbine engines, and, more particularly, to cooling structure provided in a component wall, such as an airfoil in a gas turbine engine.

### BACKGROUND OF THE INVENTION

In a turbomachine, such as a gas turbine engine, air is pressurized in a compressor then mixed with fuel and burned in a combustor to generate hot combustion gases. The hot combustion gases are expanded within a turbine of the engine where energy is extracted to power the compressor and to provide output power used to produce electricity. The hot combustion gases travel through a series of turbine stages. A turbine stage may include a row of stationary airfoils, i.e., vanes, followed by a row of rotating airfoils, i.e., turbine blades, where the turbine blades extract energy from the hot combustion gases for powering the compressor and providing output power.

Since the airfoils, i.e., vanes and turbine blades, are directly exposed to the hot combustion gases as the gases pass through the turbine, these airfoils are typically provided with internal cooling circuits that channel a coolant, such as compressor bleed air, through the airfoil and through various film cooling holes around the surface thereof. For example, film cooling holes are typically provided in the walls of the airfoils for channeling the cooling air through the walls for discharging the air to the outside of the airfoil to form a film cooling layer of air, which protects the airfoil from the hot combustion gases.

GB-A 2438861 shows a component wall having a cooling channel feeding coolant in two wall recesses.

### SUMMARY OF THE INVENTION

In accordance with a first aspect of the present invention, a component wall is provided in a turbine engine as set out in claim 1.

In accordance with another aspect of the present invention, a method is provided of forming cooling structure in a component wall of a turbine engine as set out in claim 7.

### BRIEF DESCRIPTION OF THE DRAWINGS

While the specification concludes with claims particularly pointing out and distinctly claiming the present invention, it is believed that the present invention will be better understood from the following description in conjunction with the accompanying Drawing Figures, in which like reference numerals identify like elements, and wherein:
Fig. 1 is a perspective view of a portion of a film cooled component wall according to an embodiment of the invention;
Fig. 2 is a side cross sectional view of the film cooled component wall taken along line 2-2 in Fig. 1;
Fig. 3 is a plan view of the film cooled component wall shown in Fig. 1;
Fig. 4 illustrates a method for forming a plurality of diffusion sections in a component wall according to an embodiment of the invention;
Figs. 5-8 illustrate steps for forming a plurality of diffusion sections in a component wall according to the method illustrated in Fig. 4; and
Fig. 9 is a perspective view of a film cooled component wall according another embodiment of the invention.

### DETAILED DESCRIPTION OF THE INVENTION

In the following detailed description of the preferred embodiments, reference is made to the accompanying drawings that form a part hereof, and in which is shown by way of illustration, and not by way of limitation, specific preferred embodiments in which the invention may be practiced. It is to be understood that other embodiments may be utilized and that changes may be made without departing from the spirit and scope of the present invention.

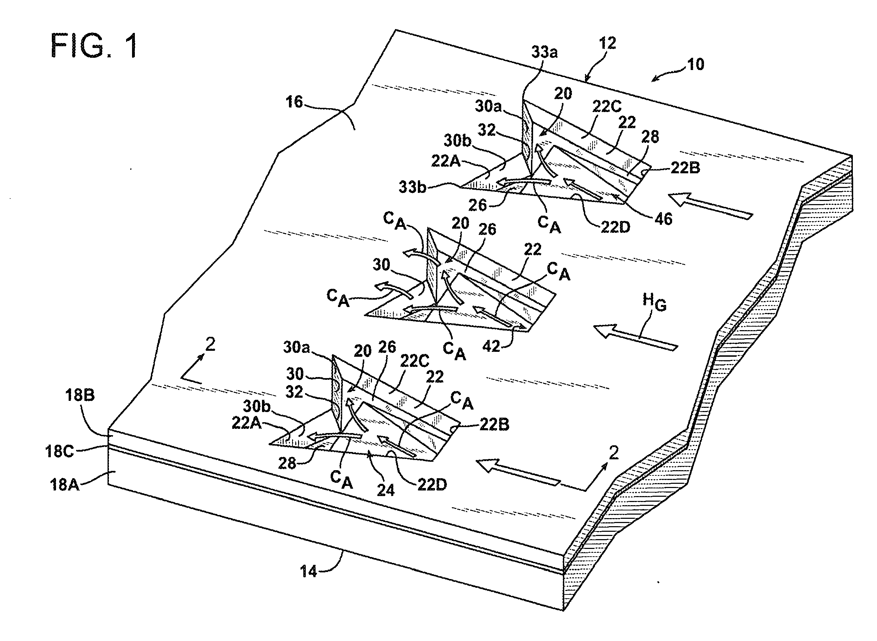

Referring to Figs. 1-3, a film cooled component wall 10 according to an embodiment of the invention is shown. The component wall 10 may comprise a portion of a component in a turbine engine, such as an airfoil, i.e., a rotating turbine blade or a stationary vane, a combustor liner, an exhaust nozzle, and the like.

The component wall 10 comprises a substrate 12 having a first surface 14 and a second surface 16. The first surface 14 may be referred to as the "cool" surface, as the first surface 14 may be exposed to cooling air, while the second surface 16 may be referred to as the "hot" surface, as the second surface 16 may be exposed to hot combustion gases during operation. Such combustion gases may have temperatures of up to about 2,000° C during operation of the engine. In the embodiment shown, the first surface 14 and the second surface 16 are opposed and substantially parallel to each other.

The material forming the substrate 12 may vary depending on the application of the component wall 10. For example, for turbine engine components, the substrate 12 preferably comprises a material capable of withstanding typical operating conditions that occur within the respective portion of the engine, such as, for example, ceramics and metal-based materials, e.g., steel or nickel, cobalt, or iron based superalloys, etc.

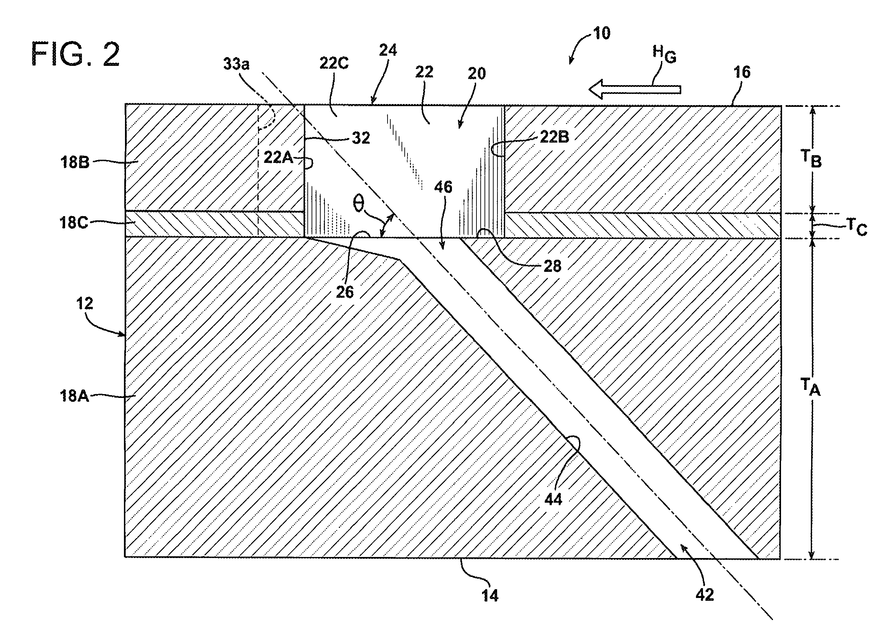

Referring to Figs. 1 and 2, the substrate 12 may comprise one or more layers, and in the embodiment shown comprises an inner layer 18A, an outer layer 18B, and an intermediate layer 18C between the inner and outer layers 18A, 18B. The inner layer 18A in the embodiment shown comprises, for example, steel or a nickel, cobalt, or iron based superalloy, and, in one embodiment, may have a thickness T_{A} of about 1.2 mm to about 2.0 mm, see Fig. 2. The outer layer 18B in the embodiment shown comprises a thermal barrier coating that is employed to provide a high heat resistance for the component wall 10, and, in one embodiment, may have a thickness T_{B} of about 0.5 mm to about 1.0 mm, see Fig. 2. The intermediate layer 18C in the embodiment shown comprises a bond coat that is used to bond the outer layer 18B to the inner layer 18A, and, in one embodiment, may have a thickness T_{C} of about 0.1 mm to about 0.2 mm, see Fig. 2. While the substrate 12 in the embodiment shown comprises the inner, outer, and intermediate layers 18A, 18B, 18C, it is understood that substrates having additional or fewer layers could be used. For example, the thermal barrier coating, i.e., the outer layer 18B, may comprise a single layer or may comprise more than one layer. In a multi-layer thermal barrier coating application, each layer may comprise a similar or a different composition and may comprise a similar or a different thickness.

As shown in Figs. 1-3, a plurality of diffusion sections 20, also referred to as craters, trenches, or slots, are formed in the component wall 10. The diffusion sections 20 may be formed in the second surface 16 of the substrate 12, i.e., the diffusion sections 20 may extend through the outer layer 18B or both the outer and intermediate layers 18B, 18C in the embodiment shown (see Fig. 2).

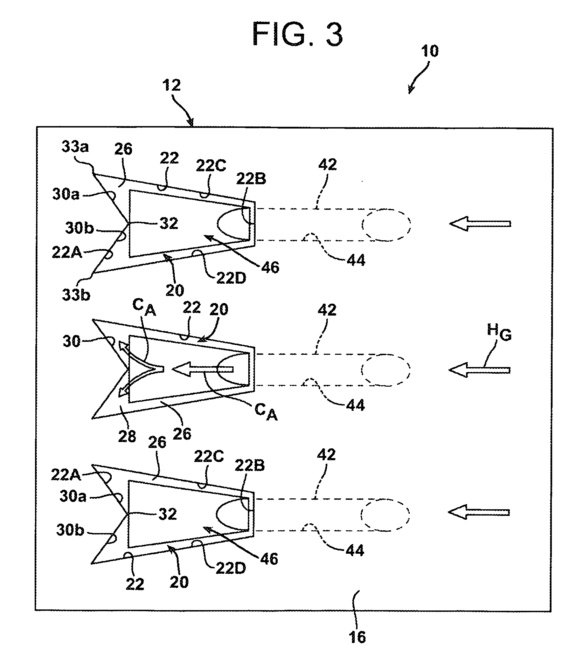

The diffusion sections 20 each comprise wall structure 22 that surrounds the respective diffusion section 20, an open top portion 24 located at the second surface 16 of the substrate 12, and a bottom surface 26. The wall structure 22 extends between the bottom surface 26 and the second surface 16 of the substrate 12. In the embodiment shown the wall structure 22 comprises a first sidewall 22A, a second sidewall 22B spaced from the first sidewall 22A, a third sidewall 22C extending between the first and second sidewalls 22A and 22B, and a fourth sidewall 22D spaced from the third sidewall 22C and also extending between the first and second sidewalls 22A and 22B. As shown in Fig. 3, the bottom surface 26 of each diffusion section 20 extends from the third sidewall 22C to the fourth sidewall 22D. It is noted that the first sidewall 22A is downstream from the second sidewall 22B with respect to a direction of hot gas H_{G} (see Figs. 1-3) flow during operation, as will be described in greater detail herein.

The first, second, third, and fourth sidewalls 22A-22D each extend outwardly continuously from the bottom surface 26 of the each diffusion section 20 to the second surface 16 of the substrate 12. That is, the first, second, third, and fourth sidewalls 22A-22D extend continuously generally perpendicular between the bottom surface 26 and the second surface 16. Further, in the embodiment shown the first, second, third, and fourth sidewalls 22A-22D are each substantially perpendicular to the second surface 16 of the substrate 12 and also to the bottom surface 26 of the respective diffusion section 20. Moreover, the second sidewall 22B of each diffusion section 20 according to this embodiment comprises a generally straight wall section extending from the third sidewall 22C to the fourth sidewall 22D, as shown most clearly in Fig. 3

The bottom surface 26 in the embodiment shown is defined by an outer surface 28 of the inner layer 18A of the substrate 12, as shown in Figs. 1-3. In the embodiment shown, the bottom surface 26 is substantially parallel to the second surface 16 of the substrate 12 and also to the first surface 14 of the substrate 12.

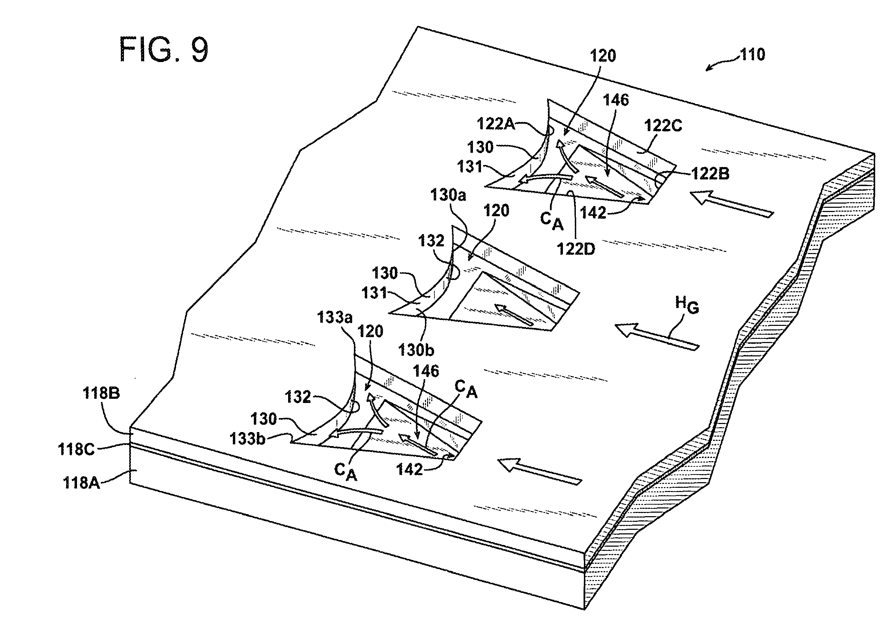

As shown most clearly in Figs. 1 and 3, the first sidewall 22A of each diffusion section 20 comprises a single protuberance 30, which may also be referred to as a bump, bulge, etc., which protuberance 30 extends axially or generally parallel to the direction of hot gas H_{G} flow toward the second sidewall 22B of the respective diffusion section 20. Each protuberance 30 according to this embodiment comprises an apex 32 and adjacent wall portions 30a, 30b extending at an angle to each other in diverging relation, in the direction of hot gas H_{G} flow, from the apex 32 to respective junctions 33a, 33b with the third and fourth sidewalls 22C, 22D. While the shape of each protuberance 30 may vary, the shape is configured so as to effect a diverging flow of cooling air C_{A} (see Fig. 1) along the first sidewall 22A during operation to change the direction of the flow of cooling air C_{A} from generally parallel to the hot gas H_{G} flow to transverse to the hot gas H_{G} flow, as will be discussed in detail herein. Further, while the protuberance 30 of each diffusion section 20 in the embodiment shown comprises generally the same shape, it is understood that one or more of the protuberances 30 may comprise one or more different shapes. It is also noted that the apexes 32 of the protuberances 30 can comprise sharp angles, as shown in Figs. 1-3, or can be rounded to various degrees, as shown in Fig. 9, as will be described herein.

Referring to Figs. 1-3, each diffusion section 20 comprises a single cooling passage 42 extending through the substrate 12 from the first surface 14 of the substrate 12 to the bottom surface 26 of the respective diffusion section 20, i.e., the cooling passage 42 of each diffusion section 20 extends through the first layer 18A in the embodiment shown. In this embodiment, each cooling passage 42 is inclined, i.e., extends at an angle θ through the substrate 12, as shown in Fig. 2. The angle θ may be, for example, about 15 degrees to about 60 degrees relative to a plane defined by the bottom surface 26, and in a preferred embodiment is between about 30 degrees to about 45 degrees.

The diameter of the cooling passages 42 may be uniform along their length or may vary. For example, throat portions 44 of the cooling passages 42 (see Figs. 2 and 3) may be substantially cylindrical, while outlets 46 of the cooling passages 42 may be elliptical, diffuser-shaped, or may have any other suitable geometry. It is noted that the outlet 46 of each cooling passage 42 is the region at which that cooling passage 42 terminates at the bottom surface 26 of the respective diffusion section 20. It is also noted that, if the outlets 46 of the cooling passages 42 comprise diffuser shapes, the portions of the substrate 12 that define the boundaries of an outlet 46 may be angled about 10 degrees relative to the axis of the respective cooling passage 42. Also, the third and fourth sidewalls 22C, 22D are shown as diverging from each other, see Figs. 1 and 3. Specifically, each of the third and fourth sidewalls 22C, 22D may be angled about 10 degrees relative to an axis of a respective cooling passage 42.

As shown in Figs. 1 and 3, the outlet 46 of each cooling passage 42 is arranged within the respective diffusion section 20 between the first, second, third, and fourth sidewalls 22A-22D of the respective diffusion section 20 such that the outlet 46 is axially aligned with the apex 32 of the respective protuberance 30. Hence, the cooling air C_{A} exiting each cooling passage 42 through the outlet 46 thereof is directed toward the protuberance 30 of the respective first sidewall 22. This configuration advantageously allows the cooling air C_{A} to flow toward the apex 32 of each protuberance 30 so as to effect a diverging flow of the cooling air C_{A} along the adjacent respective wall portions 30a, 30b during operation, as indicated by the solid line arrows in Figs. 1 and 3.

In operation, the cooling air C_{A}, which may comprise, for example, compressor discharge air or any other suitable cooling fluid, travels from a source of cooling air (not shown) to the cooling passages 42. The cooling air C_{A} flows through the cooling passages 42 and exits the cooling passages 42 via the outlets 46 thereof into the corresponding diffusion sections 20.

Subsequent to the cooling air C_{A} flowing out of the outlet 46 of each cooling passage 42, the cooling air C_{A} flows toward the apex 32 of the protuberance 30 of the respective first sidewall 22A. As shown in Figs. 1 and 3, the apex 32 of each first sidewall 22A effects a diverging flow of the cooling air C_{A} along the adjacent wall portions 30a, 30b so as to spread the cooling air C_{A} within the corresponding diffusion section 20. The cooling air C_{A} flows generally along adjacent wall portions 30a, 30b toward the junctions 33a, 33b and spreads within the diffusion section 20. The spreading of the cooling air C_{A} within the diffusion sections 20 creates a "sheet" of cooling air C_{A} within substantially each entire diffusion section 20 and improves film coverage of the cooling air C_{A} within each diffusion section 20. Hence, film cooling downstream of each diffusion section 20 provided by the cooling air C_{A} is believed to be increased.

The hot gas H_{G} flows along the second surface 16 of the substrate 12 toward the diffusion sections 20, as shown in Figs. 1-3. Since the cooling air C_{A} in the diffusion sections 20 forms a sheet of cooling air C_{A} within each diffusion section 20 as discussed above, hot gas H_{G} mixing with cooling air C_{A} in the diffusion sections 20 is believed to be reduced or substantially avoided. Rather, the majority of the hot gas H_{G} is believed to flow across the second surface 16 of the substrate 12 between the diffusions sections 20 and over the diffusion sections 20 and the sheets of cooling air C_{A} therein.

As illustrated in Fig. 1, a portion of the cooling air C_{A} flows out of each diffusion section 20 over the first sidewall 22A thereof to the second surface 16 of the substrate 12. This portion of the cooling air C_{A} provides film cooling to the second surface 16 of the substrate 12. Since the mixing of hot gas H_{G} and cooling air C_{A} within the diffusion sections 20 is believed to be reduced or substantially avoided, as discussed above, a substantially evenly distributed "curtain" of cooling fluid C_{A} flows out of each diffusion section 20 and washes up over the second surface 16 of the substrate 12 to provide film cooling to the second surface 16. Film cooling to the second surface 16 of the substrate 12 is believed to be improved by the substantially evenly distributed curtains of cooling fluid C_{A} flowing out of the respective diffusion sections 20 to the second surface 16.

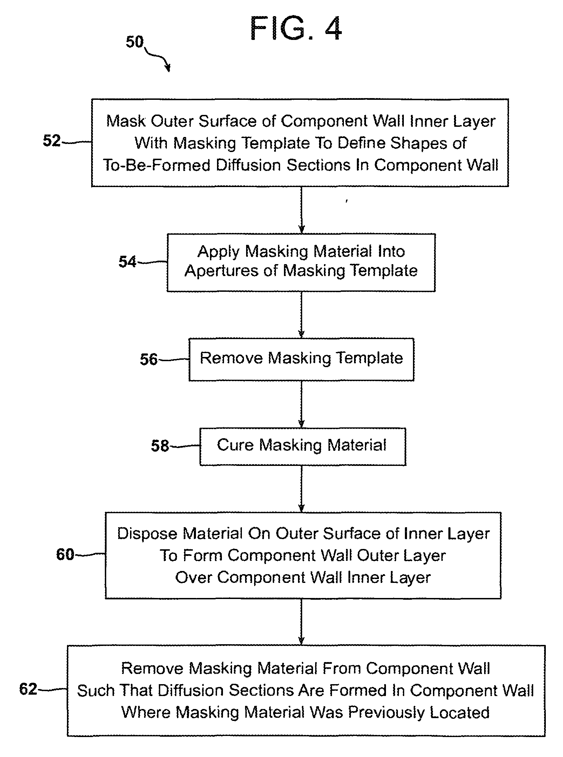

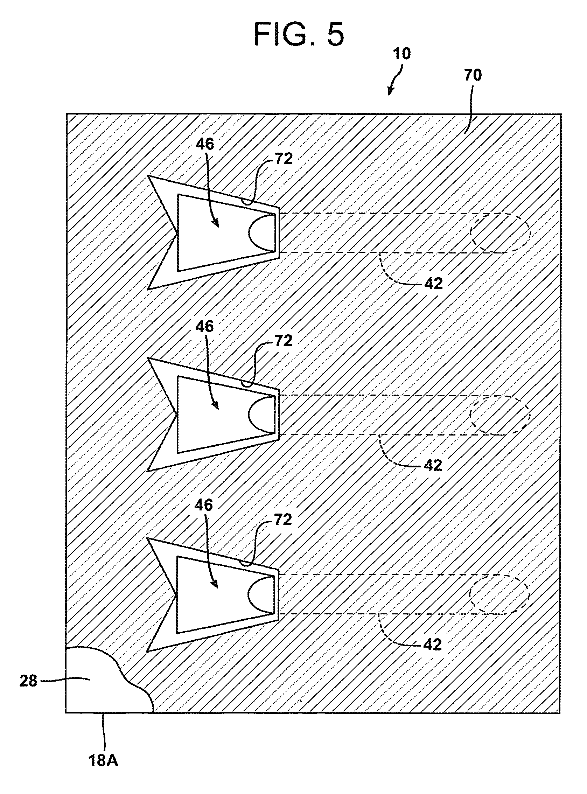

Referring to Fig. 4 and additionally to Figs. 5-8, a method 50 for forming cooling structure in a component wall of a turbine engine is illustrated. For exemplary purposes, the component wall described herein with respect to Fig. 4 may be the same component wall 10 as described above with reference to Fig. 1-3.

At step 52, an outer surface 28 of an inner layer 18A of the component wall 10 is masked with a removable masking template 70, illustrated in Fig. 5. The masking template 70 includes a plurality of apertures 72 formed therein. The apertures 72 define shapes of to-be-formed diffusion sections in the component wall 10, as will be described herein. As shown in Fig. 5, the apertures 72 are spaced from each other corresponding to spacing between outlets 46 of cooling passages 42 that extend through the inner layer 18A of the component wall 10 such that the outlets 46 of the cooling passages 42 are exposed through the apertures 72. In the embodiment shown, the masking template 70 is configured such that protuberances of the to-be formed diffusion sections will be aligned with outlets 46 of respective ones of the cooling passages 42, as will be discussed herein. The masking template 70 may be, for example, a tape structure or other suitable removable material.

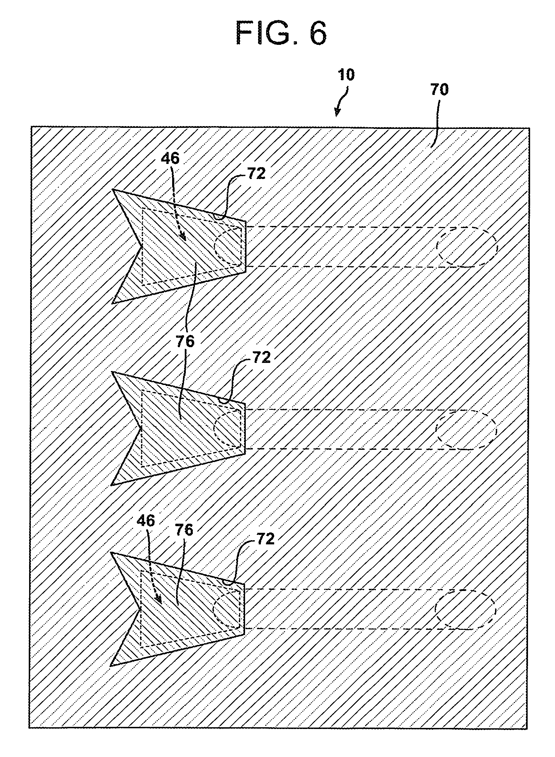

At step 54, a removable masking material 76 is applied to the component wall 10 into the apertures 72 of the masking template 70, as shown in Fig. 6. The masking material 76 may be applied, for example, by spreading the masking material 76 in the form of a paste onto the component wall 10, spray coating the masking material 76 onto the component wall 10, dipping the component wall 10 in the masking material 76, or by any other suitable method. Applying the masking material 76 into the apertures 72 of the masking template 70 blocks the outlets 46 of the cooling passages 42 and substantially fills the apertures 72 so that the masking material 76 defines the shapes of the to-be-formed diffusion sections. The masking material 76 may be formed, for example, from thermosetting or thermoplastic materials, such as epoxy resins, alkyd resins, phenolic resins, acrylic resins, thermoplastic polyesters, polyamides, polyolefins, styrene-based resins, and copolymers or mixtures of the thermoplastic materials.

At step 56, the masking template 70 is removed from the component wall 10, wherein the masking material 76 remains on the component wall 10 where the apertures 72 of the masking template 70 were previously located. Hence, the masking material 76, at this stage of assembly, still blocks the outlets 46 of the cooling passages 42.

At step 58, the masking material 76 is cured. "Curing" of the masking material 76 generally refers to the cooling down and hardening of the masking material 76, although other methods of solidifying or hardening the masking material 76 could be used, as will be apparent to those skilled in the art. It is noted that the masking material 76 could be cured before removing the masking template 70 at step 56, in which case the masking template 70 could be cured along with the masking material 76. This may be desirable, for example, if the masking template 70 is to be disposed of after it is used to form the cooling structure in the component wall 10 as described herein.

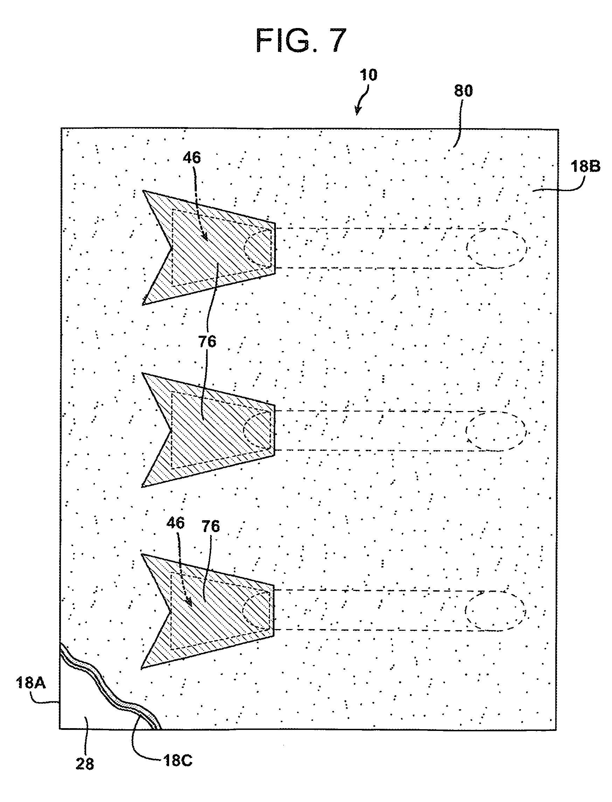

At step 60, a material 80, e.g., a thermal barrier coating, may be disposed on the outer surface 28 of the inner layer 18A to form an outer layer 18B of the component wall 10 over the inner layer 18A, illustrated in Fig. 7. Optionally, prior to disposing the outer layer 18B on the inner layer 18A, an intermediate layer 18C (see Fig. 7), e.g., a bond coat, may be applied to the inner layer 18A to facilitate a bonding of the outer layer 18B to the inner layer 18A. As another option, the bond coat may be applied to the inner layer 18A prior to the masking template 70 being applied to the inner layer 18A at step 52. This would be permissible, as the bond coat will most likely not substantially plug the outlets 46 of the cooling passages 42.

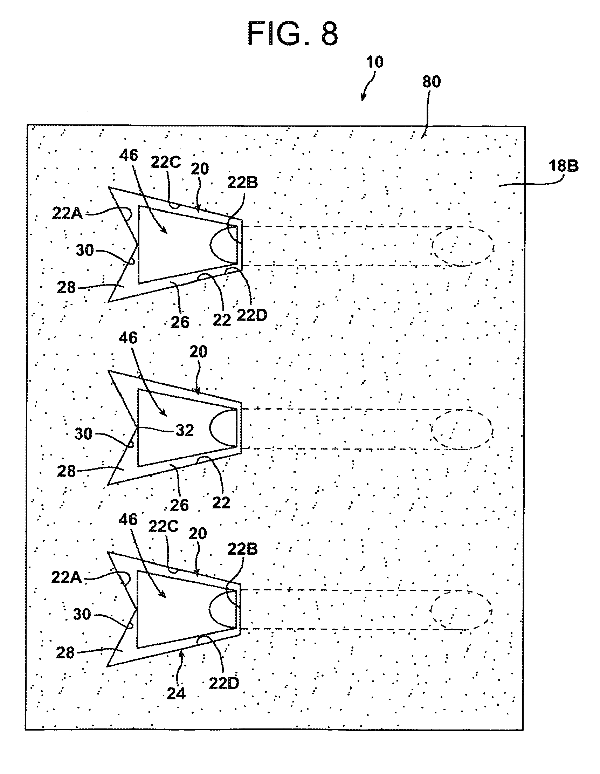

At step 62, the masking material 76 is removed from the component wall 10 such that a plurality of diffusion sections 20 are formed in the component wall 10 where the masking material 76 was previously located, see Fig. 8. The diffusion sections 20 may each be defined by wall structure 22, an open top portion 24, and a bottom surface 26, as described above with respect to Figs. 1-3. The bottom surface 26 may correspond to the surface area of the outer surface 28 of the inner layer 18A where the masking material 76 was previously located. A first sidewall 22A may be defined by the material forming the outer layer 18B of the component wall 10, and may comprise a protuberance 30 that includes an apex 32 that is aligned with the outlet 46 of the respective cooling passages 42, as described above. Second, third, and fourth sidewalls 22B, 22C, 22D of the wall structure 22 may also be defined by the material forming the outer layer 18B of the component wall 10.

Removing the masking material 76 at step 62 unblocks the outlets 46 of the cooling passages 42 such that cooling air C_{A} may pass through the cooling passages 42 and out of the outlets 46 thereof toward the protuberance 30 of each respective first sidewall 22A, as described above.

It is noted that the component wall 10 disclosed herein may comprise one or a plurality of diffusion sections 20, craters, trenches, or slots, which may or may not extend over the entire second surface 16 of the substrate 12. If the component wall 10 comprises multiple diffusion sections 20, the number, shape, and arrangement of the corresponding cooling passages 42 and the outlets 46 thereof may be the same or different than as shown in the diffusion sections 20 described herein. Further, the shape of the protuberances 30, as well as the configuration of the first, second, third, and fourth sidewalls 22A-22D may be the same or different than those of the diffusion sections 20 described herein.

Advantageously, increased performance for both cooling and aerodynamics can be realized with the disclosed component wall 10 described herein as compared to existing film-cooled component walls. Further, the method 50 disclosed herein may be employed to efficiently form a plurality of diffusion sections 20 in a component wall 10. Specifically, with the use of the masking template 70 and the masking material 76, all of the cooling passage outlets 46 can be covered in a single step, i.e., with the masking material 76, rather than requiring each of the outlets 46 to be separately covered with individual portions of a masking material. Hence, the time required to form the cooling structure in the component wall 10 and the complexity thereof are reduced as compared to if the outlets 46 of the cooling passages 42 were to be individually covered. Further, with the use of the masking template 70, the shapes of the to-be-formed diffusion sections can be configured as desired.

Referring now to Fig. 9, a component wall 110 having a plurality of diffusion sections 120 formed therein according to another embodiment is shown. In Fig. 9, structure similar to that described above with reference to Figs. 1-3 includes the same reference number increased by 100. Further, only the structure that is different from that described above with reference to Figs. 1-3 will be specifically described herein with respect to Fig. 9.

In Fig. 9, protuberances 130 of a first sidewall 122A of each of a plurality of diffusion sections 120 are configured in a smooth, curved pattern defined by a curved wall section 131 of the respective protuberance 130. As indicated by the solid line arrows in Fig. 9, cooling air C_{A} exiting from outlets 146 of cooling passages 142 is directed toward apexes 132 of the protuberances 130, which apexes 132 are defined by a portion of the curved wall section 131 located closest to a second sidewall 122B of the respective diffusion section 120. Wall portions 130a, 130b of the curved wall section 131 effect a diverging flow of the cooling air C_{A} along the first sidewall 122A, which wall portions 130a, 130b diverge from opposing sides of the apexes 132.

The diffusion sections 20, 120 described herein may be formed as part of a repair process or may be implemented in new airfoil designs. Further, the diffusion sections 20, 120 may be formed by other processes than the one described herein. For example, the substrate 12 may comprise a single layer and the diffusion sections 20, 120 may be machined in an outer surface 16 of the substrate layer.

While particular embodiments of the present invention have been illustrated and described, it would be obvious to those skilled in the art that various other changes and modifications can be made without departing from the scope of the invention as set out in the appended claims.

## Claims

1. A component wall (10 or 110) in a turbine engine comprising:
a substrate (12) having a first surface (14) and a second surface (16) opposed from said first surface (14);
a plurality of diffusion sections (20 or 120) located in said second surface (16), each said diffusion section (20 or 120) defined by a bottom surface (26) between said first and second surfaces (14, 16), an open top portion (24) located at said second surface (16), and wall structure (22) extending from said bottom surface (26) to said second surface (16), said wall structure (22) surrounding the respective diffusion section (20 or 120) and comprising at least a first sidewall (22A or 122A) and a second sidewall (22B or 122B) opposed from said first sidewall (22A or 122A);
wherein:
said first sidewall (22A or 122A) of each said diffusion section (20 or 120) comprises a protuberance (30 or 130) extending toward said second sidewall (22B or 122B) of the respective diffusion section (20 or 120); and
each said diffusion section (20 or 120) comprises a single cooling passage (42 or 142), said cooling passage (42 or 142) of each said diffusion section (20 or 120) extending through said substrate (12) from said first surface (14) to said bottom surface (26) of the respective diffusion section (20 or 120), wherein an outlet (46 or 146) of each said cooling passage (42 or 142) is arranged within the respective diffusion section (20 or 120) such that cooling air (C_{A}) exiting each said cooling passage (42 or 142) through said outlet (46 or 146) is directed toward said protuberance (30 or 130) of the respective first sidewall (22A or 122A),
wherein said protuberance (30 or 130) of said first sidewall (22A or 122A) of each said diffusion section (20 or 120) comprises an apex (32 or 132) aligned with an outlet (46 or 146) of a respective cooling passage (42 or 142) to effect a diverging flow of cooling air (C_{A}) along said first sidewall (22A or 122A),
wherein said wall structure (22) further comprises:
a third sidewall (22C or 122C) extending between said first and second sidewalls (22A or 122A, 22B or 122B); and
a fourth sidewall (22D or 122D) opposed from said third sidewall (22C or 122C) and extending between said first and second sidewalls (22A or 122A, 22B or 122B), wherein said bottom surface (26) extends from said third sidewall (22C or 122C) to said fourth sidewall (22D or 122D).

2. The component wall of claim 1, wherein said first and second sidewalls of said wall structure of each said diffusion section are substantially perpendicular to said second surface.

3. The component wall of claim 1, wherein said second surface and said bottom surface of each said diffusion section are substantially parallel to one another.

4. The component wall of claim 1, wherein at least one of said protuberances is defined by a curved wall section of said first sidewall, said apex of the respective protuberance defined by a portion of said curved wall section located closest to said second sidewall.

5. The component wall of claim 1, wherein at least one of said protuberances is defined by a pair of wall sections of said first sidewall that extend at an angle relative to each other and come together at said apex.

6. The component wall of claim 1, wherein said second sidewall of each said diffusion section:
comprises a generally straight wall section extending from said third sidewall to said fourth sidewall; and
is generally perpendicular to said second surface.

7. A method of forming cooling structure in a component wall of a turbine engine comprising:
masking an outer surface of an inner layer of the component wall with a masking template, said masking template including apertures defining shapes of a plurality of to-be-formed diffusion sections in the component wall, the apertures spaced from each other corresponding to spacing between outlets of cooling passages extending through the inner layer of the component wall such that the outlets of the cooling passages are exposed through the apertures;
applying a masking material to the component wall into the apertures in the masking template so as to block the outlets of the cooling passages;
removing the masking template; and
applying a material on the outer surface of the inner layer to form an outer layer of the component wall over the inner layer, the outer layer surrounding the plurality of to-be-formed diffusion sections in the component wall,
wherein the method further comprises removing the masking material from the component wall such that a plurality of diffusion sections are formed in the component wall where the masking material was previously located,
wherein each diffusion section is defined by:
a bottom surface corresponding to the surface area of the outer surface of the inner layer of the component wall where the masking material was previously located, the bottom surface substantially parallel to an outer surface of the outer layer of the component wall;
a first sidewall defined by the material forming the outer layer of the component wall, the first sidewall being substantially perpendicular to the bottom surface; and
a second sidewall spaced from the first sidewall and defined by the material forming the outer layer of the component wall,
wherein each diffusion section is further defined by:
a third sidewall extending between the first and second sidewalls and being substantially perpendicular to the bottom surface; and
a fourth sidewall opposed from the third sidewall and extending between the first and second sidewalls, the fourth sidewall being substantially perpendicular to the bottom surface,
wherein the bottom surface of each diffusion section extends from the third sidewall to the fourth sidewall,
wherein the masking template is configured to form a protuberance in each of the first sidewalls extending toward the respective second sidewall of each to-be-formed diffusion section and aligned with an outlet of a respective cooling passage.

8. The method of claim 7, wherein the second sidewall is substantially perpendicular to the bottom surface.

9. The method of claim 7, further comprising, prior to applying the material on the outer surface of the inner layer, applying a bond coat to the outer surface of the inner layer of the component wall.

10. The method of claim 7, wherein applying a material on the outer surface of the inner layer comprises applying a thermal barrier coating on the outer surface of the inner layer.

11. The method of claim 7, wherein, subsequent to applying a masking material and prior to applying the material on the outer surface of the inner layer, curing the masking material.

## Patentansprüche

1. Bauteilwand (10 oder 110) in einem Turbinentriebwerk, welche umfasst:
ein Substrat (12), das eine erste Fläche (14) und eine zweite Fläche (16), die dieser ersten Fläche (14) gegenüberliegt, aufweist;
mehrere Diffusionsabschnitte (20 oder 120), die in der zweiten Fläche (16) angeordnet sind, wobei jeder solche Diffusionsabschnitt (20 oder 120) durch eine untere Fläche (26) zwischen der ersten und der zweiten Fläche (14, 16), einen freiliegenden oberen Abschnitt (24), der bei der zweiten Fläche (16) angeordnet ist, und eine Wandstruktur (22), die sich von der unteren Fläche (26) zu der zweiten Fläche (16) erstreckt, definiert ist, wobei diese Wandstruktur (22) den jeweiligen Diffusionsabschnitt (20 oder 120) umgibt und mindestens eine erste Seitenwand (22A oder 122A) und eine zweite Seitenwand (22B oder 122B), die dieser ersten Seitenwand (22A oder 122A) gegenüberliegt, umfasst;
wobei:
die erste Seitenwand (22A oder 122A) jedes Diffusionsabschnitts (20 oder 120) einen Vorsprung (30 oder 130) umfasst, der sich in Richtung der zweiten Seitenwand (22B oder 122B) des jeweiligen Diffusionsabschnitts (20 oder 120) erstreckt; und
jeder Diffusionsabschnitt (20 oder 120) einen einzigen Kühlkanal (42 oder 142) umfasst, wobei sich dieser Kühlkanal (42 oder 142) jedes Diffusionsabschnitts (20 oder 120) durch das Substrat (12) von der ersten Fläche (14) bis zu der unteren Fläche (26) des jeweiligen Diffusionsabschnitts (20 oder 120) erstreckt, wobei ein Auslass (46 oder 146) jedes Kühlkanals (42 oder 142) innerhalb des jeweiligen Diffusionsabschnitts (20 oder 120) angeordnet ist, so dass Kühlluft (C_{A}), die aus jedem solchen Kühlkanal (42 oder 142) durch den Auslass (46 oder 146) austritt, in Richtung des Vorsprungs (30 oder 130) der jeweiligen ersten Seitenwand (22A oder 122A) gelenkt wird,
wobei der Vorsprung (30 oder 130) der ersten Seitenwand (22A oder 122A) jedes Diffusionsabschnitts (20 oder 120) einen Scheitel (32 oder 132) aufweist, der mit einem Auslass (46 oder 146) eines jeweiligen Kühlkanals (42 oder 142) fluchtet, um einen divergierenden Strom von Kühlluft (C_{A}) entlang der ersten Seitenwand (22A oder 122A) zu bewirken,
wobei die Wandstruktur (22) ferner umfasst:
eine dritte Seitenwand (22C oder 122C), die sich zwischen der ersten und der zweiten Seitenwand (22A oder 122A, 22B oder 122B) erstreckt; und
eine vierte Seitenwand (22D oder 122D), die der dritten Seitenwand (22C oder 122C) gegenüberliegt und sich zwischen der ersten und der zweiten Seitenwand (22A oder 122A, 22B oder 122B) erstreckt, wobei sich die untere Fläche (26) von der dritten Seitenwand (22C oder 122C) zur vierten Seitenwand (22D oder 122D) erstreckt.

2. Bauteilwand nach Anspruch 1, wobei die erste und die zweite Seitenwand der Wandstruktur jedes Diffusionsabschnitts im Wesentlichen senkrecht zu der zweiten Fläche sind.

3. Bauteilwand nach Anspruch 1, wobei die zweite Fläche und die untere Fläche jedes Diffusionsabschnitts im Wesentlichen parallel zueinander sind.

4. Bauteilwand nach Anspruch 1, wobei mindestens einer der Vorsprünge durch einen gekrümmten Wandabschnitt der ersten Seitenwand definiert ist, wobei der Scheitel des jeweiligen Vorsprungs durch einen Abschnitt des gekrümmten Wandabschnitts definiert ist, welcher der zweiten Seitenwand am nächsten angeordnet ist.

5. Bauteilwand nach Anspruch 1, wobei mindestens einer der Vorsprünge durch ein Paar von Wandabschnitten der ersten Seitenwand definiert ist, welche sich unter einem Winkel relativ zueinander erstrecken und an dem Scheitel zusammentreffen.

6. Bauteilwand nach Anspruch 1, wobei die zweite Seitenwand jedes Diffusionsabschnitts:
einen im Wesentlichen geraden Wandabschnitt umfasst, der sich von der dritten Seitenwand zur vierten Seitenwand erstreckt; und
im Wesentlichen senkrecht zu der zweiten Fläche ist.

7. Verfahren zum Ausbilden einer Kühlstruktur in einer Bauteilwand eines Turbinentriebwerks, welches umfasst:
Maskieren einer äußeren Fläche einer inneren Schicht der Bauteilwand mit einer Maskierschablone, wobei diese Maskierschablone Öffnungen aufweist, welche Formen mehrerer zu bildender Diffusionsabschnitte in der Bauteilwand definieren, wobei die Öffnungen voneinander entsprechend Abständen zwischen Auslässen von Kühlkanälen, die sich durch die innere Schicht der Bauteilwand erstrecken, beabstandet sind, so dass die Auslässe der Kühlkanäle durch die Öffnungen hindurch freiliegen;
Aufbringen eines Maskiermaterials auf die Bauteilwand in die Öffnungen in der Maskierschablone, so dass die Auslässe der Kühlkanäle blockiert werden;
Entfernen der Maskierschablone; und
Aufbringen eines Materials auf die äußere Fläche der inneren Schicht, um eine äußere Schicht der Bauteilwand über der inneren Schicht zu bilden, wobei die äußere Schicht die mehreren zu bildenden Diffusionsabschnitte in der Bauteilwand umgibt,
wobei das Verfahren ferner das Entfernen des Maskiermaterials von der Bauteilwand umfasst, so dass dort, wo sich zuvor das Maskiermaterial befand, mehrere Diffusionsabschnitte in der Bauteilwand gebildet werden,
wobei jeder Diffusionsabschnitt definiert ist durch:
eine untere Fläche, die dem Flächenbereich der äußeren Fläche der inneren Schicht der Bauteilwand entspricht, wo sich zuvor das Maskiermaterial befand, wobei die untere Fläche im Wesentlichen parallel zu einer äußeren Fläche der äußeren Schicht der Bauteilwand ist;
eine erste Seitenwand, die durch das die äußere Schicht der Bauteilwand bildende Material definiert ist, wobei die erste Seitenwand im Wesentlichen senkrecht zu der unteren Fläche ist; und
eine zweite Seitenwand, die von der ersten Seitenwand beabstandet ist und durch das die äußere Schicht der Bauteilwand bildende Material definiert ist,
wobei jeder Diffusionsabschnitt ferner definiert ist durch:
eine dritte Seitenwand, die sich zwischen der ersten und der zweiten Seitenwand erstreckt und im Wesentlichen senkrecht zu der unteren Fläche ist; und
eine vierte Seitenwand, die der dritten Seitenwand gegenüberliegt und sich zwischen der ersten und der zweiten Seitenwand erstreckt, wobei die vierte Seitenwand im Wesentlichen senkrecht zu der unteren Fläche ist,
wobei sich die untere Fläche jedes Diffusionsabschnitts von der dritten Seitenwand zur vierten Seitenwand erstreckt,
wobei die Maskierschablone dafür ausgebildet ist, einen Vorsprung in jeder der ersten Seitenwände zu bilden, der sich in Richtung der jeweiligen zweiten Seitenwand jedes zu bildenden Diffusionsabschnitts erstreckt und mit einem Auslass eines jeweiligen Kühlkanals fluchtet.

8. Verfahren nach Anspruch 7, wobei die zweite Seitenwand im Wesentlichen senkrecht zu der unteren Fläche ist.

9. Verfahren nach Anspruch 7, welches ferner, vor dem Aufbringen des Materials auf die äußere Fläche der inneren Schicht, das Aufbringen einer Haftvermittlerschicht auf die äußere Fläche der inneren Schicht der Bauteilwand umfasst.

10. Verfahren nach Anspruch 7, wobei das Aufbringen eines Materials auf die äußere Fläche der inneren Schicht das Aufbringen einer Wärmedämmschicht auf die äußere Fläche der inneren Schicht umfasst.

11. Verfahren nach Anspruch 7, wobei nach dem Aufbringen eines Maskiermaterials und vor dem Aufbringen des Materials auf die äußere Fläche der inneren Schicht ein Härten des Maskiermaterials durchgeführt wird.

## Revendications

1. Paroi (10 ou 110) de composant de turbomoteur comprenant :
un substrat (12) comportant une première surface (14) et une deuxième surface (16) opposée à ladite première surface (14) ;
une pluralité de sections de diffusion (20 ou 120) situées dans ladite deuxième surface (16), chacune desdites sections de diffusion (20 ou 120) étant définie par une surface inférieure (26) entre lesdites première et deuxième surfaces (14, 16), une partie supérieure ouverte (24) située sur ladite deuxième surface (16) et une structure formant paroi (22) s'étendant de ladite surface inférieure (26) à ladite deuxième surface (16), ladite structure formant paroi (22) entourant les sections de diffusion (20 ou 120) respectives et comprenant au moins une première paroi latérale (22A ou 122A) et une deuxième paroi latérale (22B ou 122B) opposée à ladite première paroi latérale (22A ou 122A),
étant entendu :
que ladite première paroi latérale (22A ou 122A) de chacune desdites sections de diffusion (20 ou 120) comprend une saillie (30 ou 130) s'étendant vers ladite deuxième paroi latérale (22B ou 122B) de la section de diffusion (20 ou 120) respective, et
que chacune desdites sections de diffusion (20 ou 120) comprend un unique passage de refroidissement (42 ou 142), ledit passage de refroidissement (42 ou 142) de chacune desdites sections de diffusion (20 ou 120) s'étendant à travers ledit substrat (12), de ladite première surface (14) à ladite surface inférieure (26) de la section de diffusion (20 ou 120) respective, étant entendu qu'une sortie (46 ou 146) de chacun desdits passages de refroidissement (42 ou 142) est agencée à l'intérieur de la section de diffusion (20 ou 120) respective de telle sorte que l'air de refroidissement (C_{A}) quittant chacun desdits passages de refroidissement (42 ou 142) par ladite sortie (46 ou 146) est dirigé vers ladite saillie (30 ou 130) de la première paroi latérale (22A ou 122A) respective,
étant entendu que ladite saillie (30 ou 130) de ladite première paroi latérale (22A ou 122A) de chacune desdites sections de diffusion (20 ou 120) comprend un sommet (32 ou 132) aligné sur une sortie (46 ou 146) d'un passage de refroidissement (42 ou 142) respectif pour produire un flux divergent d'air de refroidissement (C_{A}) le long de ladite première paroi latérale (22A ou 122A),
étant entendu que ladite structure formant paroi (22) comprend par ailleurs :
une troisième paroi latérale (22C ou 122C) s'étendant entre lesdites première et deuxième parois latérales (22A ou 122A, 22B ou 122B), et
une quatrième paroi latérale (22D ou 122D) opposée à ladite troisième paroi latérale (22C ou 122C) et s'étendant entre lesdites première et deuxième parois latérales (22A ou 122A, 22B ou 122B), ladite surface inférieure (26) s'étendant de ladite troisième paroi latérale (22C ou 122C) à ladite quatrième paroi latérale (22D ou 122D).

2. Paroi de composant selon la revendication 1, dans laquelle lesdites première et deuxième parois latérales de ladite structure formant paroi de chacune desdites sections de diffusion sont sensiblement perpendiculaires à ladite deuxième surface.

3. Paroi de composant selon la revendication 1, dans laquelle ladite deuxième surface et ladite surface inférieure de chacune desdites sections de diffusion sont sensiblement parallèles l'une à l'autre.

4. Paroi de composant selon la revendication 1, dans laquelle au moins l'une desdites saillies est définie par une section de paroi incurvée de ladite première paroi latérale, ledit sommet de la saillie respective étant défini par une partie de ladite section de paroi incurvée située le plus près de ladite deuxième paroi latérale.

5. Paroi de composant selon la revendication 1, dans laquelle au moins l'une desdites saillies est définie par une paire de sections de paroi de ladite première paroi latérale qui s'étendent sous un angle relatif l'une par rapport à l'autre et se rejoignent audit sommet.

6. Paroi de composant selon la revendication 1, dans laquelle ladite deuxième paroi latérale de chacune desdites sections de diffusion :
comprend une section de paroi globalement rectiligne s'étendant de ladite troisième paroi latérale à ladite quatrième paroi latérale, et
est globalement perpendiculaire à ladite deuxième surface.

7. Procédé de façonnage d'une structure de refroidissement dans une paroi de composant de turbomoteur consistant :
à masquer une surface externe d'une couche interne de la paroi de composant avec un gabarit de masquage, ledit gabarit de masquage comportant des ouvertures définissant les formes d'une pluralité de sections de diffusion à façonner dans la paroi de composant, les ouvertures étant espacées l'une de l'autre conformément à l'espacement des sorties des passages de refroidissement s'étendant à travers la couche interne de la paroi de composant de telle sorte que les sorties des passages de refroidissement soient apparentes à travers les ouvertures ;
à appliquer un matériau de masquage sur la paroi de composant dans les ouvertures du gabarit de masquage de sorte à obturer les sorties des passages de refroidissement ;
à retirer le gabarit de masquage, et
à appliquer un matériau sur la surface externe de la couche interne pour former une couche externe de la paroi de composant sur la couche interne, la couche externe entourant la pluralité de sections de diffusion à façonner dans la paroi de composant,
étant entendu que le procédé consiste par ailleurs à retirer le matériau de masquage de la paroi de composant de telle sorte qu'une pluralité de sections de diffusion soient façonnées dans la paroi de composant là où le matériau de masquage était situé auparavant,
étant entendu que chaque section de diffusion est définie par :
une surface inférieure correspondant à l'aire de la surface externe de la couche interne de la paroi de composant où le matériau de masquage était situé auparavant, la surface inférieure étant sensiblement parallèle à une surface externe de la couche externe de la paroi de composant ;
une première paroi latérale définie par le matériau formant la couche externe de la paroi de composant, la première paroi latérale étant sensiblement perpendiculaire à la surface inférieure, et
une deuxième paroi latérale espacée par rapport à la première paroi latérale et définie par le matériau formant la couche externe de la paroi de composant,
étant entendu que chaque section de diffusion est par ailleurs définie par :
une troisième paroi latérale s'étendant entre les première et deuxième parois latérales et sensiblement perpendiculaires à la surface inférieure, et
une quatrième paroi latérale opposée à la troisième paroi latérale et s'étendant entre les première et deuxième parois latérales, la quatrième paroi latérale étant sensiblement perpendiculaire à la surface inférieure,
étant entendu que la surface inférieure de chaque section de diffusion s'étend de la troisième paroi latérale à la quatrième paroi latérale ;
étant entendu que le gabarit de masquage est configuré pour façonner dans chacune des premières parois latérales une saillie s'étendant vers la deuxième paroi latérale respective de chaque section de diffusion à façonner et alignée sur une sortie d'un passage de refroidissement respectif.

8. Procédé selon la revendication 7, dans lequel la deuxième paroi latérale est sensiblement perpendiculaire à la surface inférieure.

9. Procédé selon la revendication 7, consistant par ailleurs à appliquer, avant d'appliquer le matériau sur la surface externe de la couche interne, un revêtement d'accrochage sur la surface externe de la couche interne de la paroi de composant.

10. Procédé selon la revendication 7, dans lequel l'application d'un matériau sur la surface externe de la couche interne consiste à appliquer un revêtement formant barrière thermique sur la surface externe de la couche interne.

11. Procédé selon la revendication 7, dans lequel, après l'application d'un matériau de masquage et avant l'application du matériau sur la surface externe de la couche interne, on fait durcir le matériau de masquage.
